(19) **Europäisches Patentamt European Patent Office Office européen des brevets**

(11) **EP 3 949 734 A1**

(12) **EUROPEAN PATENT APPLICATION**
published in accordance with Art. 153(4) EPC

(43) Date of publication:
**09.02.2022 Bulletin 2022/06**

(21) Application number: **20782700.7**

(22) Date of filing: **25.03.2020**

(51) International Patent Classification (IPC):
*A01N 37/46* (2006.01)     *A01P 21/00* (2006.01)
*A01N 25/00* (2006.01)     *A01N 25/02* (2006.01)

(52) Cooperative Patent Classification (CPC):
**A01N 25/00; A01N 25/02; A01N 37/46**

(86) International application number:
**PCT/JP2020/013221**

(87) International publication number:
**WO 2020/203522 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2019 JP 2019066050**

(71) Applicant: **Kaneka Corporation
Osaka-shi, Osaka 530-8288 (JP)**

(72) Inventors:
• **ASADA Takayuki
Takasago-shi, Hyogo 676-8688 (JP)**
• **WATANABE Toyoaki
Takasago-shi, Hyogo 676-8688 (JP)**
• **UEKITA Ken
Takasago-shi, Hyogo 676-8688 (JP)**

(74) Representative: **Hoffmann Eitle
Patent- und Rechtsanwälte PartmbB
Arabellastraße 30
81925 München (DE)**

(54) **GLUTATHIONE-CONTAINING COMPOSITION TO BE APPLIED ON PLANT LEAVES**

(57)    One or more embodiments of the present invention are intended to promote absorption of glutathione into plant leaves.

One or more embodiments of the present invention relate to a composition for application to plant leaves comprising glutathione and a nonionic surfactant having an HLB value of 8 or more and 17 or less. One or more embodiments of the present invention also relate to an agent for promoting absorption of glutathione into plant leaves, comprising the above-described nonionic surfactant. One or more embodiments of the present invention also relate to a method for promoting absorption of glutathione into plant leaves, comprising applying glutathione, together with the above-described nonionic surfactant, to plant leaves. One or more embodiments of the present invention also relate to a method for cultivating a plant, comprising: applying glutathione, together with the above-described nonionic surfactant, to plant leaves; and growing the plant after the applying.

EP 3 949 734 A1

**Description**

Technical Field

The present invention relates to a glutathione-containing composition for application to plant leaves, an agent for promoting absorption of glutathione into plant leaves, a method for promoting absorption of glutathione into plant leaves, and a method for cultivating a plant.

Background Art

Glutathione is a peptide consisting of three amino acids, namely, L-cysteine, L-glutamic acid and glycine, and exists not only in human bodies, but also in many organisms such as other animals, plants, and microorganisms. Glutathione, which involves in, for example, elimination of active oxygen, detoxification, and amino acid metabolism, is an important compound for organisms.

Glutathione is present in a living body in the form of: either reduced glutathione (N-(N-γ-L-glutamyl-L-cysteinyl)glycine; hereinafter also referred to as "GSH"), in which the thiol group of the L-cysteine residue is in a reduced state, SH; or oxidized glutathione (hereinafter also referred to as "GSSG"), in which the thiol group of the L-cysteine residue in two molecules of GSH is oxidized, and a disulfide bond is formed between two molecules of glutathione.

It has been known that glutathione is useful in different fields including fertilizers, pharmaceutical products, or cosmetic products.

Patent Literature 1 discloses that GSSG is useful as an active ingredient of a plant growth regulator for improving the harvest index of plants, and for example, GSSG has an action to increase the number of plant seeds and flowers, or increases the number of side buds or tillers.

Patent Literature 2 discloses that, in a method for promoting the growth of a plant by applying GSSG to plant leaves, when application of a fertilizer component to the plant leaves is combined with application of GSSG, the GSSG and the fertilizer component synergistically act, and thereby the plant growth-promoting effect is significantly enhanced.

Meanwhile, Patent Literature 3 discloses a fertilizer composition, which is characterized in that, in order to promote application of inorganic calcium salts to a plant, the fertilizer composition comprises, as essential components, a hydrophilic nonionic surfactant having an HLB value of 10 or more, having a hydrocarbon group containing 12 to 18 carbon atoms as a hydrophobic group, and also having a polyoxyethylene group with the additional number of moles of 8 to 40; and a fertilizer component consisting of inorganic calcium salts.

It has been known that the absorbability of a fertilizer component from the surface of a plant leaf is largely different depending on the type of the fertilizer component. Non Patent Literature 1 discloses that the absorbability of inorganic salts from the surface of a leaf is relatively high, whereas the absorbability of amino acid from the leaf surface is low.

Citation List

Patent Literature

Patent Literature 1: International Publication No. WO2008/072602
Patent Literature 2: International Publication No. WO2017/006869
Patent Literature 3: JP Patent Publication No. 2002-104894 A

Non Patent Literature

Non Patent Literature 1: Kanto, Tokai, Hokuriku Agricultural Research Achievement Information, pp. 192-193 (vol. 3), 2001

Summary of Invention

Technical Problem

As disclosed in Patent Literature 2, applying GSSG to plant leaves can promote the growth of a plant. On the other hand, as disclosed in Non Patent Literature 1, it has been known that the absorbing rate of amino acids from the surface of a plant leaf is significantly low, compared with inorganic salts. Patent Literature 3 discloses that absorption of inorganic calcium salts into a plant is promoted by combining the inorganic calcium salts with a nonionic surfactant having a predetermined HLB value. However, Patent Literature 3 does not disclose at all a means for promoting absorption of a peptide consisting of amino acids into a leaf.

Enhancing absorption of glutathione into plant leaves could lead to enhancing the action of the glutathione to promote plant growth and reducing the amount of the glutathione applied, which could lead to cost reduction. One or more embodiments of the present invention are intended to promote absorption of glutathione into plant leaves.

Solution to Problem

In the present description, the following means are disclosed as means for solving the aforementioned problems.

(1) A composition for application to plant leaves comprising glutathione and a nonionic surfactant having an HLB value of 8 or more and 17 or less.
(2) The composition according to the above (1), wherein the glutathione is oxidized glutathione.
(3) The composition according to the above (1) or (2), wherein the nonionic surfactant is one or more selected from polyoxyethylene alkyl ether, polyoxyethylene sorbitan fatty acid ester, and polyoxyethylene sorbitol fatty acid ester.
(4) An agent for promoting absorption of glutathione into plant leaves, comprising a nonionic surfactant having an HLB value of 8 or more and 17 or less.
(5) A method for promoting absorption of glutathione into plant leaves, comprising applying glutathione, together with a nonionic surfactant having an HLB value of 8 or more and 17 or less, to plant leaves.
(6) The method according to the above (5), further comprising growing the plant after the applying, and allowing the leaves to absorb the glutathione.
(7) A method for cultivating a plant, comprising:

applying glutathione, together with a nonionic surfactant having an HLB value of 8 or more and 17 or less, to plant leaves; and
growing the plant after the applying.

(8) Use of a nonionic surfactant having an HLB value of 8 or more and 17 or less for promoting absorption of glutathione into plant leaves.
(9) Use of a nonionic surfactant having an HLB value of 8 or more and 17 or less in the manufacture of an agent for promoting absorption of glutathione into plant leaves.
(10) Use of a nonionic surfactant having an HLB value of 8 or more and 17 or less in the manufacture of a glutathione-containing composition for application to plant leaves.

The present description includes part or all of the contents as disclosed in Japanese Patent Application No. 2019-066050, which is a priority document of the present application.

Advantageous Effects of Invention

Absorption of glutathione into plant leaves can be promoted by applying the glutathione, together with a nonionic surfactant having an HLB value of 8 or more and 17 or less, to the plant leaves.

Description of Embodiments

< Glutathione >

Glutathione may be either reduced glutathione (GSH, (N-(N-γ-L-glutamyl-L-cysteinyl)glycine), or oxidized glutathione (GSSG) formed by binding two molecules of GSH with each other via a disulfide bond. Glutathione is preferably GSSG.

Glutathione (GSSG or GSH) may include various forms of glutathione, such as a free form in which glutathione is neither bonded to another substance nor ionized, a salt formed by glutathione with an acid or a base, a hydrate thereof, and a mixture thereof.

When GSSG is used as glutathione, a mixture of GSSG and GSH may be used. In such a case, it is preferable that the content of GSSG is relatively higher than the content of GSH. Further preferably, the total mass of GSSG (the mass calculated as a free form), with respect to the total mass of GSSG and GSH (the mass calculated in that they are both free forms), is, in total, 70% by mass or more, more preferably 80% by mass or more, even more preferably 90% by mass or more, further preferably 95% by mass or more, still further preferably 98% by mass or more, and most preferably 100% by mass.

The salt of GSSG is not particularly limited, as long as it is one or more salts that are acceptable as a fertilizer, such as an ammonium salt, a calcium salt, a magnesium salt, a sodium salt, and a lithium salt. Preferably, it is one or more selected from an ammonium salt, a calcium salt, and a magnesium salt. Examples of the salt of GSSG include 1 ammonium salt of GSSG, 0.5 calcium salt or 1 calcium salt of GSSG, and 0.5 magnesium salt or 1 magnesium salt of GSSG.

< Nonionic surfactant >

One or more embodiments of the present invention are based on the findings that absorption of glutathione into plant leaves is significantly promoted by applying the glutathione, together with a nonionic surfactant having an HLB value of 8 or more and 17 or less, to plant leaves.

When such a nonionic surfactant has an HLB value of 15 or more and 17 or less, it is preferable because absorption of glutathione into plant leaves is particularly significantly promoted.

The type of the nonionic surfactant having an HLB value of 8 or more and 17 or less is not particularly limited. Multiple types of nonionic surfactants may also be combined. The nonionic surfactant is more preferably one or a combination of two or more selected from polyoxyethylene alkyl ether, polyoxyethylene sorbitan fatty acid ester, and polyoxyethylene sorbitol fatty acid ester, and is particularly preferably one or a combination of two or more selected from polyoxyethylene alkyl ether and polyoxyethylene sorbitan fatty acid ester.

Examples of the polyoxyethylene alkyl ether include polyoxyethylene oleyl ether, polyoxyethylene lauryl ether, polyoxyethylene cetyl ether, polyoxyethylene stearyl ether, and polyoxyethylene alkyl ether.

Examples of the polyoxyethylene sorbitan fatty acid ester include polyoxyethylene sorbitan monooleate, polyoxyethylene sorbitan monolaurate, polyoxyethylene sorbitan monopalmitate, polyoxyethylene tristearate, and polyoxyethylene triisostearate.

An example of the polyoxyethylene sorbitol fatty acid ester is polyoxyethylene sorbit tetraoleate.

< Plants >

The target plants, to the leaf surfaces of which glutathione and a predetermined nonionic surfactant are applied according to one or more embodiments of the present invention, are not particularly limited. The target plants include various plants such as dicotyledons and monocotyledons.

Examples of the dicotyledons, to which the glutathione and the nonionic surfactant can be applied, include plants belonging to Pharbitis, Calystegia, Ipomoea, Cuscuta, Dianthus, Stellaria, Minuartia, Cerastium, Sagina, Arenaria, Moehringia, Pseudostellaria, Honckenya, Spergula, Spergularia salina, Silene, Lychnis, Melandryum, Caryophyllaceae, Casuarinaceae, Saururaceae, Piperaceae, Chloranthaceae, Salicaceae, Myricaceae, Juglandaceae, Betulaceae, Fagaceae, Ulmaceae, Moraceae, Urticaceae, Podostemaceae, Proteaceae, Olacaceae, Santalaceae, Viscum album, Aristolochiaceae, Mitrastemonaceae, Balanophoraceae, Polygonaceae, Chenopodiaceae, Amaranthaceae, Nyctaginaceae, Theligonaceae, Phytolaccaceae, Tetragoniaceae, Portulacaceae, Magnoliaceae, Trochodendraceae, Cercidiphyllaceae, Nymphaeaceae, Ceratophyllaceae, Ranunculaceae, Lardizabalaceae, Berberidaceae, Menispermaceae, Calycanthaceae, Lauraceae, Papaveraceae, Capparaceae, Brassicaceae, Droseraceae, Nepenthaceae, Crassulaceae, Saxifragaceae, Pittosporaceae, Hamamelidaceae, Platanaceae, Rosaceae, Fabaceae, Oxalidaceae, Geraniaceae, Linaceae, Zygophyllaceae, Rutaceae, Simaroubaceae, Meliaceae, Polygalaceae, Euphorbiaceae, Callitrichaceae, Buxaceae, Empetraceae, Coriariaceae, Anacardiaceae, Aquifoliaceae, Celastraceae, Staphyleaceae, Icacinaceae, Aceraceae, Hippocastanaceae, Sapindaceae, Sabiaceae, Balsaminaceae, Rhamnaceae, Vitaceae, Elaeaocarpaceae, Tiliaceae, Malvaceae, Sterculiaceae, Actinidia arguta, Theaceae, Clusiaceae, Elatinaceae, Tamaricaceae, Violaceae, Flacourtiaceae, Stachyuraceae, Passifloraceae, Begoniaceae, Cactaceae, Thymelaeaceae, Elaeagnaceae, Lythraceae, Punica granatum, Rhizophoraceae, Alangiaceae, Melastomataceae, Trapaceae, Onagraceae, Haloragaceae, Hippuridaceae, Araliaceae, Apiaceae, Cornaceae, Diapensiaceae, Clethraceae, Pyrolaceae, Ericaceae, Myrsinaceae, Primulaceae, Plumbaginaceae, Ebenaceae, Symplocaceae, Styracaceae, Oleaceae, Buddlejaceae, Gentianaceae, Apocynaceae, Asclepiadaceae, Polemoniaceae, Boraginaceae, Verbenaceae, Lamiaceae, Solanaceae, Scrophulariaceae, Bignoniaceae, Pedaliaceae, Orobanchaceae, Gesneriaceae, Lentibulariaceae, Acanthaceae, Myoporaceae, Phrymaceae, Plantaginaceae, Rubiaceae, Caprifoliaceae, Adoxaceae, Valerianaceae, Dipsacaceae, Cucurbitaceae, Campanulaceae, and Asteraceae. Particularly preferred examples of the dicotyledon include plants belonging to Solanaceae, Brassicaceae, Amaranthaceae, and Umbelliferae. The plants belonging to Solanaceae are particularly preferably plants belonging to genus Solanum, such as potato. The plants belonging to Brassicaceae are particularly preferably plants belonging to genus Brassica, such as Japanese mustard spinach. The plants belonging to Amaranthaceae are particularly preferably plants belonging to genus Beta, such as sugar beet. The plants belonging to Umbelliferae are particularly preferably plants belonging to genus Daucus, such as carrot.

Examples of the monocotyledons, to which the glutathione and the nonionic surfactant can be applied, include plants belonging to Spirodela, Lemna, Cattleya, Cymbidium, Dendrobium, Phalaenopsis, Vanda, Paphiopedilum, Orchidaceae, Typhaceae, Sparganiaceae, Potamogetonaceae, Najadaceae, Scheuchzeriaceae, Alismataceae, Hydrocharitaceae, Triuridaceae, Poaceae, Cyperaceae, Arecaceae, Araceae, Eriocaulaceae, Commelinaceae, Pontederiaceae, Juncaceae, Stemonaceae, Liliaceae, Amaryllidaceae, Dioscoreaceae, Iridaceae, Musaceae, Zingiberaceae, Cannaceae, and Burmanniaceae. Particularly preferred examples of the monocotyledons include plants belonging to Amaryllidaceae and Gramineae. The plants belonging to Amaryllidaceae are particularly preferably plants belonging to genus Allium, such as onion. The plants belonging to Gramineae are particularly preferably plants belonging to genus Saccharum and Zea, such as sugar cane and corn.

The plants are not limited to wild-type plants, but may also be mutants, or transformants.

The plants are particularly preferably agriculturally useful plants, specifically, potato, Japanese mustard spinach, sugar beet, onion, carrot, sugar cane, or corn. One or more embodiments of the present invention are also effective for a potato variety in which the tissues of the leaf surface are thick, among various potatoes. The potatoes, in which the tissues of the leaf surface are thick, may be medium or late maturing varieties of potatoes. Specific examples of the medium or late maturing varieties of potatoes include *Nishiyutaka, Konafubuki, Toyoshiro,* Snowden, *Norin* 1, *Hokkaikogane, Sayaka, Kitahime, Benimaru,* and Russet Burbank.

< Application of glutathione and nonionic surfactant to plant leaves >

One or more embodiments of the present invention relate to a method for promoting absorption of glutathione into plant leaves, comprising applying glutathione, together with a nonionic surfactant having an HLB value of 8 or more and 17 or less, to plant leaves.

Preferably, the above-described method further comprises, after the applying, growing the plant, and allowing the leaves to absorb the glutathione.

The above-described one or more embodiments are based on unexpected effects that applying glutathione, together with a nonionic surfactant having an HLB value of 8 or more and 17 or less, to plant leaves can significantly promote absorption of the glutathione into the plant leaves.

Herein, the glutathione and the nonionic surfactant having an HLB value of 8 or more and 17 or less may be applied to the leaves simultaneously or sequentially, or may also be applied to the leaves at separate time points. Moreover, the glutathione and the nonionic surfactant having an HLB value of 8 or more and 17 or less may be applied in a state in which they are comprised in a single composition. Otherwise, the glutathione and the nonionic surfactant may be each comprised in compositions that are physically separated from each other, and may be then applied simultaneously, sequentially, or at separate time points. The configuration of a composition comprising each component is as described later. The glutathione and the nonionic surfactant having an HLB value of 8 or more and 17 or less, which are used in the method according to one or more embodiments of the present invention, may be prepared in the form of the after-mentioned composition according to one or more embodiments of the present invention, or the glutathione and the nonionic surfactant may be each independently prepared. When the glutathione and the nonionic surfactant having an HLB value of 8 or more and 17 or less, which are in the form of the after-mentioned composition according to one or more embodiments of the present invention, are used in the method according to one or more embodiments of the present invention, the operations favorably become simple. When the nonionic surfactant having an HLB value of 8 or more and 17 or less includes a plurality of compounds, individual compounds may also be applied to plant leaves simultaneously or sequentially, or at least some compounds may be applied to the leaves at separate time points. A plurality of nonionic surfactants having an HLB value of 8 or more and 17 or less may be applied to the leaves in a state in which the nonionic surfactants are comprised in a single composition. Alternatively, one or two or more out of the plurality of components may be comprised in two or more compositions that are physically separated from one another, and the compositions may be then applied simultaneously, sequentially, or at separate time points.

Application of the glutathione and the nonionic surfactant having an HLB value of 8 or more and 17 or less to leaves can be carried out, for example, by an application method which comprises attaching a liquid prepared by dissolving or dispersing, preferably dissolving, individual components in water and/or a water-soluble solvent, onto the surface of a leaf, or an application method which comprises attaching a solid comprising individual components, such as powders, onto the surface of a leaf. Examples of the above-described water-soluble solvent that can be used herein include alcohols such as ethanol and methanol. Examples of the method of supplying the above-described liquid onto the surface of a leaf that can be used herein include methods such as spraying and coating.

The amount ratio between the glutathione and the nonionic surfactant having an HLB value of 8 or more and 17 or less, which are to be applied to leaves, is not particularly limited, and it can be adjusted, as appropriate. For instance, the nonionic surfactant having an HLB value of 8 or more and 17 or less can be used in a total amount of, for example, 1 part by mass or more, preferably 10 parts by mass or more, preferably 25 parts by mass or more, preferably 50 parts by mass or more, preferably 75 parts by mass or more, preferably 100 parts by mass or more, and preferably 125 parts by mass or more, with respect to 100 parts by mass of the glutathione (wherein, in the present description, the mass and part by mass of the glutathione are calculated, while assuming that the glutathione is totally a free form, unless otherwise specified; the same applies below). On the other hand, the nonionic surfactant can be used in a total amount of, for example, 1000 parts by mass or less, preferably 800 parts by mass or less, preferably 400 parts by mass or less, preferably 200 parts by mass or less, and can be used in a total amount of more preferably 25 parts by mass or more and 1000 parts by mass or less, and even more preferably 100 parts by mass or more and 1000 parts by mass or less. The amount ratio used herein is not limited to an amount ratio regarding the amounts of individual components applied all at once (simultaneously or sequentially), but is a mass ratio regarding the total amounts of individual components applied to a plant. More preferably, the amount ratio of individual components applied simultaneously or sequentially is within the above-described range.

The amounts of the glutathione and the nonionic surfactant having an HLB value of 8 or more and 17 or less, which are to be applied to leaves, are not particularly limited, and can be adjusted, as appropriate, to promote the growth of a plant. The amount of the glutathione applied to a single plant body can be generally 0.01 mg or more, and can be, for example, 0.1 mg or more. The upper limit is not particularly limited, and it can be generally 100 mg or less, and can be, for example, 30 mg or less.

As a surfactant applied in combination with the glutathione to a plant, the composition may comprise another surfactant, in addition to the nonionic surfactant having an HLB value of 8 or more and 17 or less. Such another surfactant may be one or more selected from an anionic surfactant, a cationic surfactant, an amphoteric surfactant, and a nonionic surfactant having an HLB value of less than 8 or greater than 17.

The stage, during which each component is applied to leaves, is not particularly limited, and it is preferably a vegetative growth stage (the growth stage of leaves and roots) or a reproductive growth stage (a budding stage, a flowering stage, and a fruiting stage). In addition, the number of applications is not particularly limited, and it may be once, or may be several applications over a certain period of time.

< Composition for application to plant leaves >

One or more embodiments of the present invention relate to a composition for application to plant leaves comprising glutathione and a nonionic surfactant having an HLB value of 8 or more and 17 or less.

Another one or more embodiments of the present invention relate to use of a nonionic surfactant having an HLB value of 8 or more and 17 or less for in the manufacture of a composition for application to plant leaves comprising glutathione.

The form of the composition according to one or more embodiments of the present invention is not particularly limited. Examples of the form of the present composition include any given forms, including: a liquid that can be directly sprayed or coated onto the surface of a target plant leaf; a liquid that is applied after it has been diluted with a solvent such as water, a water-soluble solvent (for example, methanol and ethanol), or a mixed solvent consisting of two or more types of these solvents; a solid, such as powders or granules, that is applied after it has been dissolved or dispersed in a solvent such as water, a water-soluble solvent (for example, methanol and ethanol ), or a mixed solvent consisting of two or more types of these solvents; a solid, such as powders (a powdery agent), that is directly sprayed onto the surface of a target plant leaf; and a solid, such as powders (a powdery agent), that is applied after it has been diluted with a solid such as clay, talc, or soil. Taking into consideration storage stability, the form of a solid is preferable.

When the composition according to one or more embodiments of the present invention is a liquid, the composition may comprise a solvent, for example, water or a water-soluble solvent such as methanol or ethanol, and other components such as a dispersion stabilizer (for example, carboxymethyl cellulose and a salt thereof), a thickener, an antioxidant, other surfactants (specific examples are as described above), as well as the glutathione and the nonionic surfactant having an HLB value of 8 or more and 17 or less.

When the composition according to one or more embodiments of the present invention is a solid, the composition may comprise components such as a dispersion stabilizer (for example, carboxymethyl cellulose and a salt thereof), an excipient (for example, lactose), a disintegrator, a thickener, an antioxidant, other surfactants (specific examples are as described above), as well as the glutathione and the nonionic surfactant having an HLB value of 8 or more and 17 or less.

The mixing ratio between the glutathione and the nonionic surfactant having an HLB value of 8 or more and 17 or less in the composition according to one or more embodiments of the present invention can be determined, as in the case of the aforementioned ratio between the two components upon the application thereof.

The method for producing the composition according to one or more embodiments of the present invention is not particularly limited. The composition according to one or more embodiments of the present invention can be produced by mixing individual components with one another, or in the case of a solid composition, by performing operations such as pulverization, granulation and drying, as necessary, or in the case of a liquid composition, by performing operations such as stirring and emulsification dispersion, as necessary.

< Agent for promoting absorption of glutathione into plant leaves >

Another one or more embodiments of the present invention relate to an agent for promoting absorption of glutathione into plant leaves, comprising a nonionic surfactant having an HLB value of 8 or more and 17 or less.

Another one or more embodiments of the present invention also relate to use of a nonionic surfactant having an HLB value of 8 or more and 17 or less for promoting absorption of glutathione into plant leaves.

Another one or more embodiments of the present invention further relate to use of a nonionic surfactant having an HLB value of 8 or more and 17 or less for in the manufacture of an agent for promoting absorption of glutathione into plant leaves.

The preferred range of the nonionic surfactant is as mentioned above.

< Method for cultivating plants >

Another one or more embodiments of the present invention relate to:

a method for cultivating a plant, comprising:

applying glutathione, together with a nonionic surfactant having an HLB value of 8 or more and 17 or less, to plant leaves; and
growing the plant after the applying.

According to this embodiment, since glutathione is efficiently absorbed into plant leaves so that the growth of the plant is promoted, the plant can be cultivated with high yields or low costs.

Application of the glutathione and the nonionic surfactant to plant leaves is as described above.

The growing of the plant after application of the glutathione and the nonionic surfactant can be appropriately carried out, depending on the type of the plant.

Examples

< Experiment 1 >

Japanese mustard spinach (*Haru no Senbatsu*) cultivated in a glass chamber was used in this experiment. Onto the leaves having almost the same size of the Japanese mustard spinach plants cultivated, 20 μL each of an aqueous solution containing 0.75 g/L oxidized glutathione (GSSG), and containing 0.2 g/L or 1 g/L Polysorbate 80 (Tween 80) (HLB=15) or not-containing Polysorbate 80 (0 g/L), was added dropwise. At this time, the amount of the dropped Polysorbate 80 was 0, 27 or 133 parts by mass, with respect to 100 parts by mass of GSSG. The plants were grown for another twenty-four hours after the dropwise addition of the aqueous solution, each leaf was cut out and was then placed in a 15 mL centrifuge tube. Then, 5 mL of distilled water was added thereto to wash the surface of the leaf. Thereafter, the amount of GSSG in the washing solution was measured. At the same time, the rest of each aqueous solution for the dropwise addition was preserved for 24 hours after the dropwise addition onto the leaf surface, under the same conditions (i.e., under the same temperature and light conditions) as those for the Japanese mustard spinach leaves onto which the aqueous solution had been added dropwise. Thereafter, the amount of GSSG was measured, and thus, the amount of GSSG in 20 μL of each aqueous solution after the preservation for 24 hours was obtained. Based on the amount of GSSG in the washing solution and the amount of GSSG in each aqueous solution after the 24 hours preservation, the absorption rate, that is the rate of the amount of GSSG absorbed into the leaf, was obtained according to the following equation. The test was repeatedly carried out five times, and the mean value thereof was then calculated.

$$\text{Absorption rate (\%)} = 100 \times [1 - (\text{amount of GSSG in washing solution}$$
$$\text{used to wash leaf surface after 24 hours growing}) / (\text{amount of GSSG in 20 μL}$$
$$\text{aqueous solution for dropwise addition after 24 hours preservation})]$$

The above-calculated absorption rate was indicated as a relative value assuming the absorption rate obtained using an aqueous solution containing 0.75 g/L GSSG and no Polysorbate 80 to be 1. The results are shown in the following table.

[Table 1]

| Polysorbate 80 concentration (g/L) | GSSG absorption rate (relative value) |
|---|---|
| 0 | 1 |
| 0.2 | 7.5 |
| 1 | 9 |

< Experiment 2 >

Potato (*Nishiyutaka*) cultivated in a glass chamber was used in this experiment. Onto the leaves having almost the same size of the potato plants cultivated, 20 μL each of an aqueous solution comprising a 5 g/L fertilizer (manufactured by Kaneka Corporation) containing 15% oxidized glutathione (GSSG), and a 1 g/L different type of surfactant shown in the following table, was added dropwise. At this time, the amount of the dropped surfactant was 133 parts by mass with respect to 100 parts by mass of GSSG. As a control test, an aqueous solution that comprised a 5 g/L fertilizer (manufactured by Kaneka Corporation) containing 15% GSSG and did not comprise a surfactant was added dropwise onto the surface of the leaves in the same manner as described above. The plants were grown for another twenty-four hours after the dropwise addition of the aqueous solution, each leaf was cut out and was then placed in a 15 mL centrifuge tube. Then, 5 mL of distilled water was added thereto to wash the surface of the leaf. Thereafter, from the amount of GSSG in the washing solution, the amount of GSSG absorbed into the leaf was obtained as an absorption rate by the same procedures as those in Experiment 1. The test was repeatedly carried out five times, and the mean value thereof was then calculated.

Evaluation "++" indicates a case where the absorption rate of GSSG in each test using a surfactant was higher than the absorption rate of GSSG in a control test, and where there was a significant difference ($p < 0.01$) with respect to the absorption rate of GSSG in the control test according to a T test. Evaluation "+" indicates a case where the absorption rate of GSSG in each test using a surfactant was higher than the absorption rate of GSSG in a control test, and where there was a significant difference ($p < 0.05$) with respect to the absorption rate of GSSG in the control test according to a T test (provided that the case of $p < 0.01$ evaluated to be "++" was excluded). Evaluation "-" indicates a case a case where the absorption rate of GSSG in each test using a surfactant did not have a significant difference with respect to the absorption rate of GSSG in the control test.

The results are shown in the following table.

[Table 2]

| Product name | Composition | HLB | Effects |
|---|---|---|---|
| RHEODOL SP-O10V (Kao) | Sorbitan monooleate | 4 | - |
| EMULGEN 404 (Kao) | Polyoxyethylene oleyl ether | 8 | + |
| EMULGEN 409PV (Kao) | Polyoxyethylene oleyl ether | 12 | + |
| RHEODOL 460V (Kao) | Polyoxyethylene sorbit tetraoleate | 14 | + |
| RHEODO TW-O120V (Kao) | Polyoxyethylene sorbitan monooleate | 15 | ++ |
| EMULGEN 430 (Kao) | Polyoxyethylene oleyl ether | 16 | ++ |
| Tween 20 (Kishida Chemical) | Polyoxyethylene sorbitan monolaurate | 17 | ++ |
| EMULGEN A-500 (Kao) | Polyoxyethylene distyrenated phenyl ether | 18 | - |
| EMANON 3199VB (Kao) | Polyethylene glycol monostearate | 19 | - |

All publications, patents and patent applications cited in the present description are incorporated herein by reference in their entirety.

**Claims**

1.    A composition for application to plant leaves, comprising glutathione and a nonionic surfactant having an HLB value of 8 or more and 17 or less.

2. The composition according to claim 1, wherein the glutathione is oxidized glutathione.

3. The composition according to claim 1 or 2, wherein the nonionic surfactant is one or more selected from polyoxyethylene alkyl ether, polyoxyethylene sorbitan fatty acid ester, and polyoxyethylene sorbitol fatty acid ester.

4. An agent for promoting absorption of glutathione into plant leaves, comprising a nonionic surfactant having an HLB value of 8 or more and 17 or less.

5. A method for promoting absorption of glutathione into plant leaves, comprising applying glutathione, together with a nonionic surfactant having an HLB value of 8 or more and 17 or less, to plant leaves.

6. A method for cultivating a plant, comprising:

applying glutathione, together with a nonionic surfactant having an HLB value of 8 or more and 17 or less, to plant leaves; and
growing the plant after the applying.

## INTERNATIONAL SEARCH REPORT

| International application No. |
|---|
| PCT/JP2020/013221 |

**A. CLASSIFICATION OF SUBJECT MATTER**
Int. Cl. A01N37/46(2006.01)i, A01P21/00(2006.01)i, A01N25/00(2006.01)i, A01N25/02(2006.01)i
FI: A01N37/46, A01N25/00 101, A01N25/02, A01P21/00
According to International Patent Classification (IPC) or to both national classification and IPC

**B. FIELDS SEARCHED**

Minimum documentation searched (classification system followed by classification symbols)
Int. Cl. A01N37/46, A01P21/00, A01N25/00, A01N25/02

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)
CAplus/MEDLINE/EMBASE/BIOSIS (STN)

**C. DOCUMENTS CONSIDERED TO BE RELEVANT**

| Category* | Citation of document, with indication, where appropriate, of the relevant passages | Relevant to claim No. |
|---|---|---|
| X | CN 103651366 A (LIANGSHAN HUASEN FORESTRY | 1, 3-6 |
| Y | TECHNOLOGY CO., LTD.) 26 March 2014, claims 1-10, examples 1-3, claims 1-10, examples 1-3 | 2-3 |
| X | CN 107439591 A (WEIFANG HONOR-BIO TECHNOLOGY CO., | 1, 3-6 |
| Y | LTD.) 08 December 2017, claims 1-10, paragraphs [0015], [0017], claims 1-10, paragraphs [0015], [0017] | 2-3 |
| Y | JP 2002-104894 A (KAO CORP.) 10 April 2002, claims 1-5, paragraph [0009] | 3 |
| Y | WO 2008/072602 A1 (JAPAN SCIENCE AND TECHNOLOGY AGENCY) 19 June 2008, claims 1-15 | 2 |

☐ Further documents are listed in the continuation of Box C.   ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 22.05.2020 | 09.06.2020 |

| Name and mailing address of the ISA/<br>    Japan Patent Office<br>    3-4-3, Kasumigaseki, Chiyoda-ku,<br>    Tokyo 100-8915, Japan | Authorized officer |
| | Telephone No. |

Form PCT/ISA/210 (second sheet) (January 2015)

## INTERNATIONAL SEARCH REPORT
Information on patent family members

International application No.

PCT/JP2020/013221

| Patent Documents referred to in the Report | Publication Date | Patent Family | Publication Date |
|---|---|---|---|
| CN 103651366 A | 26.03.2014 | (Family: none) | |
| CN 107439591 A | 08.12.2017 | (Family: none) | |
| JP 2002-104894 A | 10.04.2002 | (Family: none) | |
| WO 2008/072602 A1 | 19.06.2008 | EP 2103212 A1 claims 1-15 CA 2672275 A CN 101557709 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008072602 A
- WO 2017006869 A
- JP 2002104894 A
- JP 2019066050 A

**Non-patent literature cited in the description**

- **KANTO, TOKAI.** *Hokuriku Agricultural Research Achievement Information,* 2001, vol. 3, 192-193